# EUROPEAN PATENT SPECIFICATION

(11) **EP 1 683 427 B1**
(45) Date of publication and mention of the grant of the patent: **05.11.2008**
(21) Application number: 06250271.1
(22) Date of filing: 19.01.2006
(51) Int. Cl.: A23G 3/20, A21C 15/00

(54) **Convergent spray nozzle apparatus**
Konvergenter Sprühdüsenapparat
Appareil de buse de pulvérisation convergente

(30) Priority: 19.01.2005 US 39164
(43) Date of publication of application: 26.07.2006
(73) Proprietor: United Technologies Corporation, Hartford, CT 06101 (US)
(72) Inventor: Cosby, Steven A., Rogersville, AL 35652 (US); Van Waveren, Beth, Huntsville, AL 35801 (US); Kelly, Matthew, Huntsville, AL 35806 (US)
(74) Representative: Leckey, David Herbert

(56) References cited:
- EP-A- 0 554 707
- GB-A- 751 409
- US-A- 1 761 132
- US-A- 3 717 752
- US-A- 4 193 373

## Description

### Field of the Disclosure

The field of the disclosure generally relates to a convergent spray nozzle apparatus and, more particularly, relates to an apparatus and method for preparing food in an automated fashion with a convergent spray.

### Background of the Disclosure

Many foods today are prepared in a highly automated fashion. Examples include industrial sized bakeries, confectionaries and the like. In many of these instances, it is necessary to spray or otherwise apply various ingredients and seasonings to the food product being prepared. One example would be in the preparation of snack products, such as potato chips. After the potato chips have been processed, cut and deep fried, baked or otherwise prepared, it is often desirable to provide seasonings such as salt, spices or other flavorings often in powder form, to the prepared potato chip. In order to ensure that the seasonings adhere to the food product being prepared, a binder of sorts is often used as well. In the case of snack products, such a binder could be provided in the form of oil such as com oil, vegetable oil, or the like. The binder and seasoning can be mixed prior to being dispersed or being separately applied.

However, currently, there are no commercially available foodspray applicators which can spray such seasonings, binders and additives in a uniform, adjustable and highly automated fashion. It would therefore be advantageous if a foodspray applicator were to be created which could convergently spray oils, liquid sugars, dry seasonings, and other items uniformly upon a food product being prepared.

A prior art spray apparatus, having the features of the preamble of claim 1, is shown in US 4 193 373.

### Summary of the Disclosure

There is provided, according to the present invention, a food preparation system as claimed in claim 1 and a method of preparing food products as claimed in claim 22.

In accordance with one aspect of the invention, a food preparation system is disclosed which comprises a conveyor, at least one spray nozzle assembly, a supply of edible material, and a source of fluid. The conveyor is adapted to transport a supply of food product. The spray nozzle assembly is positioned proximate the conveyor. The supplies of edible material and fluid are each connected to the spray nozzle assembly. The spray nozzle assembly includes a first conduit, and a second conduit. The first conduit expels the fluid. The second conduit expels the edible material. The first and second conduits are arranged to produce an edible material spray pattern for applying to the food product.

A spray nozzle assembly for applying edible material to food products is also disclosed which comprises a first conduit, and a second conduit. The first conduit is adapted to be connected to a supply of fluid. The second conduit is adapted to be connected to a supply of edible material.

In accordance with another aspect of the invention, a method of preparing food products is disclosed which comprises the steps of conveying a supply of food product, positioning at least one spray nozzle assembly over the food product, directing a supply of binder through the spray nozzle assembly directing a supply of edible material through the spray nozzle assembly, mixing the binder and edible material downstream of the spray nozzle assembly, and depositing the edible material and binder on the food product.

These and other features of the disclosure will become more apparent upon reading the following detailed description when taken in conjunction with the accompanying drawings.

### Brief Description of the Drawings

Fig. 1 is a schematic representation of one embodiment of a food preparation system constmcted in accordance with the teachings of the disclosure;

Fig. 2 is a side view of one embodiment of an array of spray nozzle assemblies positioned in a food-conveying system constructed in accordance with the teachings of the disclosure;

Fig. 3 is a front view of the array of spray nozzle assemblies of Fig. 2;

Fig. 4 is a sectional view of one of the spray nozzle assemblies of Fig. 2 taken along line 4-4 of Fig. 2; and

Fig. 5 is an enlarged front view of one spray nozzle assembly of Fig. 2.

While the following disclosure is susceptible to various modifications and alternative constructions, certain illustrative embodiments thereof have been shown in the drawings and will be described below in detail. It should be understood, however, that there is no intention to limit the disclosure to the specific forms disclosed.

### Detailed Description of the Disclosure

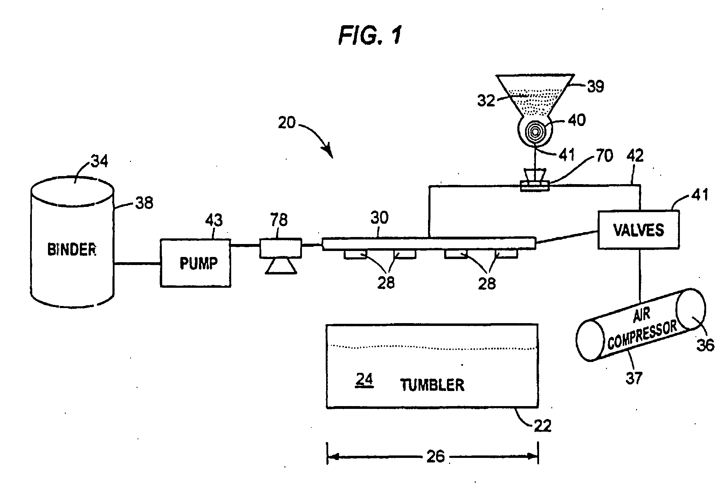

Referring now to the drawings, and with specific reference to Fig. 1, one embodiment of a food preparation system constructed in accordance with the teachings of the disclosure is generally referred to by reference numeral 20. While the depiction and following text will be made primarily with respect to the preparation of a food product such as snack products, it is understood that the teachings of the disclosure can be used in the preparation of many other food products including, but not limited to, baked goods, candies, cereals, and the like.

The system 20 may include a conveyor to transport a food product 24 along a production line. As shown in Fig. 1, the conveyor of the system 20 may include a tumbler 22 adapted to tumble, overturn, or otherwise expose all sides of a food product 24 in a repetitive fashion across a lateral width 26. The tumbler may include a blade or the like for flipping the food products. As used herein, "conveyor" is understood to mean any mechanism for moving a food product, with a tumbler being but one example. It is also to be understood that the tumbler 22 would be provided as a component in a more extensive food preparation system wherein upstream of the tumbler 22 would be various stations for preparing the food product 24 to the condition they are in upon reaching the tumbler 22, and downstream of the tumbler 22, various stations would be provided for handling the product thereafter. For example, in the preparation of potato chips, stations for cleaning, cutting, deep frying and baking would be provided upstream of the tumbler 22, and stations for packaging and transporting would be provided downstream of the tumbler 22. If tumbling of the food product 24 is unnecessary, the conveyor could be a conveyor belt or other suitable mechanism (not shown) that moves the food product 24 without tumbling, overturning, or otherwise mixing.

As also shown in Fig. 1, the food preparation system 20 could include a plurality or array of spray nozzle assemblies 28 mounted over the tumbler 22 upon one or more support bars 30. It is envisioned that the support bar 30, and thus array of spray nozzle assemblies 28, would be provided in the tumbler 22, at a suitable distance to ensure adequate application of the seasoning on the food product 24. For example, the spray nozzle assemblies 28 could be placed between approximately 23 to 30 cm (nine to twelve inches) above the food product in the tumbler 22. It will also be noted that the array of spray nozzle assemblies 28 may extend the entire lateral width 26 of the tumbler 22, but could also extend for just a portion of the lateral width 26. In addition to the spray nozzle assemblies 28, the food preparation system 20 further includes a supply 32 of edible material, such as a powdered seasoning, or any other solid, liquid or gaseous product to be applied to the food product 24.

The food preparation system 20 may include a supply 34 of edible material such as a binder like oil, or other solid liquid or gaseous product to be applied to the food product or to assist with the application of the seasoning to the food product 24. The food preparation system 20 also includes a supply 36 of a fluid, such as compressed air 36, to assist with the application of the seasoning and, if utilized, the oil to the food product 24. Such supplies 32, 34, 36 can be provided in any number of conventional forms with the depiction providing the supply 36 of air in the form of an industrial air compressor 37, the supply 34 of oil in the form of a tank 38, and the supply 32 of seasonings in the form of a loss-in-weigh feeder or hopper 39. The air compressor 37 can be a conventional design adapted to produce any desired air pressure, such as but not limited to 0.55 to 0.79 MPa (80-115 psig). The hopper 39 could be provided with a screw conveyor 40 to enable the seasoning 32 to be moved through its outlet 41. The seasoning can fall by gravity feed into a venturi air eductor 70 and be carried by eductor vacuum to the spray nozzle assembly 28. A valve 41 or the like may be used to direct the compressed air to the spray nozzle assemblies 28 and the supply line 42 as will be described in further detail herein. A metering pump 43 may be provided to direct the oil from the tank 38 through a flow meter 78 and then to the spray nozzle assemblies 28 in a dynamically controllable manner.

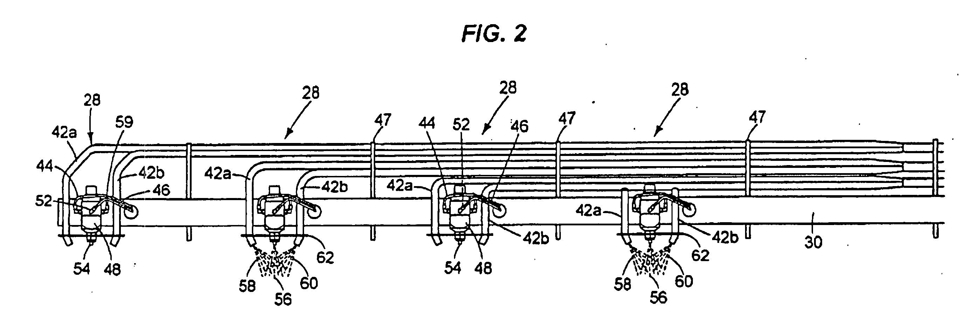

Referring now to Fig. 2, a bottom view of the array of spray nozzle assemblies 28 is depicted in the tumbler 22. As shown therein, each spray nozzle assembly 28 is mounted to the support bar 30 and provided with a number of inlet lines. More specifically, a supply line 44 connects the supply 34 of oil to each of the spray nozzle assemblies 28, one or more supply lines 42A and 42B connect the supply 32 of seasoning to each of the spray nozzle assemblies 28, and a supply line 46 connects the supply 36 of compressed air to each of the spray nozzle assemblies 28. Lines 42, 44, 46 can be any number of conventional conduits, but as the structure is involved in food preparation, the material from which the conduit is constructed should be sterilizable. Accordingly, one suitable material would be Nylon® , although other polymeric and metallic materials are possible as well. A support bracket 47 may be provided to support the spray nozzle assemblies 28 and supply lines 42-46, with scallops 49 being provided to secure each of the lines in position.

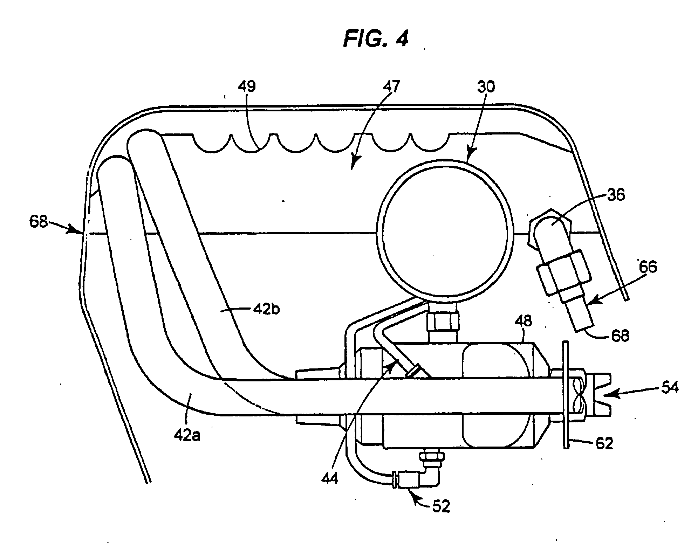

With reference now to Fig. 4, one of the plurality of nozzle assemblies 28 is shown in detail. As depicted therein in one embodiment, each spray nozzle assembly 28 includes a conduit 48. Conduits 42A and 42B may be positioned relative to the conduit 48 so as to laterally flank the central conduit 48, although other arrangements are possible. For example, conduits 42A and 42B could be positioned adjacent to the conduit 48 in a lateral, above or below orientation. In other embodiments, the multiple conduits 48, 42A and 42B could be positioned in linearly alternating fashion, a circular orientation or any other configuration suited to a given snack product applicator.

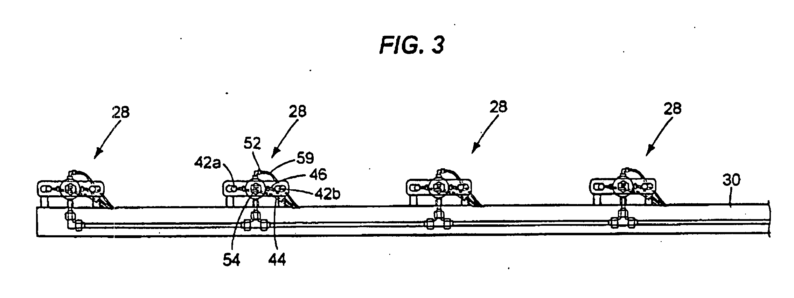

As shown best in Figs. 2 and 3, the air supply line 4ti directs compressed air into the conduit 48. If the food product 24 requires such application, then the oil feed line 44 can direct a stream of oil (or other binder) into the conduit 48. Accordingly, when a gun trigger 52 is activated, the oil and air are released through a nozzle outlet 54. Given the presence of the pressurized air and the small dimension of the nozzle outlet, the oil is immediately atomized and released in a desired spray pattern 56 out of the nozzle outlet 54. For example, the spray pattern could have a fan shape, although in other applications, the spray pattern could be substantially cylindrical, or extend in a rectangular ribbon shape, or in any number of other shapes and configurations. Actuation of the gun trigger 52 could remove a pin 57 from the nozzle outlet 54, thus enabling the pressurized air and oil to be expelled. Compressed air provided through supply line 59 may be used to activate the gun trigger 52.

In one embodiment, the fan spray pattern 56 results in an angular arc of sixty five degrees, but it is certainly possible to tailor the arc as desired by adjusting the air pressure or size and shape of the nozzle aperture.
Concurrent with the oil spray, seasoning carried by compressed air is discharged from the outer conduits 42A and 42B in desired spray patterns 58 and 60, which overlap and converge with the spray pattern 56. To facilitate this, the conduits 42A and 42B may include outlets from conduits 42A and 42B which are inwardly angled toward the conduit 48. For example, the spray patterns could have fan shapes. As with spray pattern 56, other types of spray patterns can be mounted, including, but not limited to, cylindrical, conical, ribbon, intermittent, oscillating or the like.

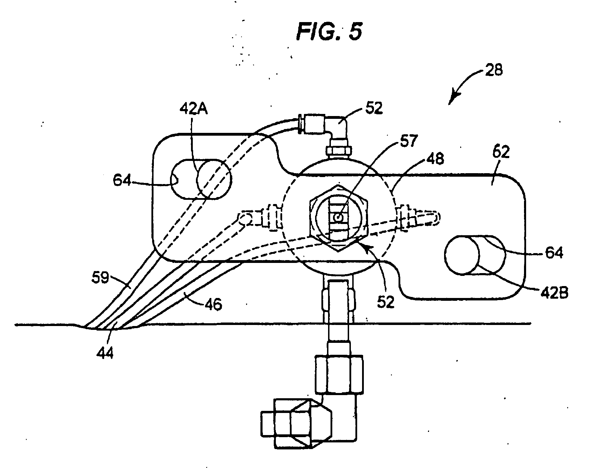

As a result of the foregoing, directly in front of the spray nozzle assembly 28 the oil and seasoning converge and mix prior to being deposited on the potato chips. To facilitate proper alignment of the outer conduits 42A and 42B relative to the central conduit 48, and their resulting spray patterns, a plate 62 may be provided proximate a front side of the nozzle assemblies 28. As shown in Fig. 5, the plate 62 may be provided with slots 64 to allow for lateral variability in the spray patterns. In addition, it will be noted that slots 64 are provided at offset heights related to the central conduit 48, thus widening the spray pattern. More specifically, in the depicted embodiment, the slots are at offset heights in that one slot 64 and thus conduit 42A is provided above the conduit 48, and the other slot 64 and conduit 42B is provided below the conduit 48. In other embodiments, additional slots or other mechanisms could be provided to allow for adjustment of the conduits 42A and 42B in lateral or other directions as well. Moreover, in other embodiments, the conduit or conduits can be provided at the same height as tlie conduit 48, or at different distances from the conduit 48 than that shown.

As depicted in Fig. 4, the system 20 could include a nozzle cleaning or blowoff system 66. As shown, the cleaning system 66 may include an outlet or blower port 68 positioned proximate the outlets 54 of the spray nozzle assemblies 28. The system 66 may include an inlet connected to the supply 36 of compressed air 36 that also feeds the conduits 42. In so doing, a vacuum can be created to carry the powdered seasoning from the hopper 39. The cleaning system 66 can be used continuously or intermittently so as to direct a stream of compressed air or other fluid to the outlet 54 and thus facilitate cleaning of the outlet 54 ensuring that the spray exiting therefrom is able to maintain consistency.

The food preparation system 20 can also include a protective cover 68 extending across the array of spray nozzles 28 and support bar 30 to thus ensure the sanitary nature of the operation. The protective cover 68 can be manufactured of stainless steel or other sterilizable and easily cleanable material. In addition, the nozzle 28 and cleaning system 66 are also preferably manufactured of stainless steel such as, but not limited to, 316 stainless steel for similar reasons.

In operation, the food preparation system 20 can be used to coat a food product 24 with an edible material 32 such as a seasoning or other powder, and can help secure such seasonings or powder to the food product 24 using another edible material 34 such as a binder like oil. By spraying the binder 34 and seasoning 32 in converging spray patterns, the two are able to sufficiently mix prior to being deposited upon the food product 24. This prior mixing helps ensure a uniform coating of both the seasoning and oil on the food product itself. More specifically, once the food products 24 are communicated to the tumbler 22, they are exposed to the convergent sprays. In the tumbler 22, the food product 24 is continuously overturned or otherwise presented for coating with the oil 34 and seasonings 32. Concurrent with such motion, gun trigger 52 is actuated to thus relieve the pressure within the conduit 48, thereby expelling the oil 34 and air 36 through the nozzle 54. In so doing, the oil 34 is immediately atomized and discharged from the nozzle 54 in the desired spray pattern 56.

Adjacent the nozzle 54, the conduits 42A and 42B similarly spray the seasoning 32 in spray patterns 58 and 60. By controlling the air pressure within the conduits 42A and 42B, the spray patterns 58 and 60 are tailored so as to converge with the spray pattern 56 a suitable distance in front of the nozzle 54, and prior to application upon the food product 24 moving within the tumbler 22. Moreover, by providing a plurality of nozzle spray assemblies 28 across the lateral width 26 of the tumbler 22, the uniform coating of the seasonings and binder are assured across the entire width and thus volume of the food product 24 being processed within the tumbler 22. It is to be further understood that other alternative orientations are possible. For example, multiple rows of nozzle assemblies 28 could extend along the lateral width 26 of the tumbler, or in another direction across the tumbler. Moreover, the spray nozzle assemblies 28 could be mounted directly in the tumbler 28. One of ordinary skill in the art will readily understand multiple other mounting orientations are possible with the scope of the present invention.

It can therefore be seen that the teachings of the disclosure can be used to provide a food preparation system ensuring a consistently produced application of seasoning and binder materials to a food product being prepared.

## Claims

1. A food preparation system (20) , comprising:
a conveyor (22) adapted to transport a supply of food product (24);
at least one spray nozzle assembly (28) positioned proximate the conveyor (22);
a supply (32) of edible material connected to the spray nozzle assembly (28); and
a source (36) of fluid connected to the spray nozzle assembly (28);
**characterised in that** the spray nozzle assembly (28) includes:
a first conduit (48) for expelling the fluid in a first spray pattern (56); and
a second conduit (42A; 42B) adjacent the first conduit (48) for expelling the edible material in a second spray pattern (58,60);
the first and second conduits being arranged such that said spray patterns overlap downstream of said conduits to produce an edible material spray pattern (56, 58, 60) for applying to the food product.

2. The food preparation system of claim 1, comprising an array of spray nozzle assemblies (28) and wherein the array of spray nozzle assemblies (28) are all mounted on a single support bar (30).

3. The food preparation system of claim 2, wherein the support bar (30) extends across the entire lateral width of the conveyor (22).

4. The food preparation system of any preceding claim, further including a protective cover (68) extending over the at least one or the array of spray nozzle assemblies (28).

5. The food preparation system of any preceding claim, further including a cleaning system (66) positioned adjacent the first conduit (48).

6. The food preparation system of claim 5, wherein a blower port (68) of said cleaning system is connected to a source of compressed air.

7. The food preparation system of any preceding claim, wherein the supply (32) of edible material is a seasoning.

8. The food preparation system of claim 7, wherein the supply of seasoning is provided in a loss-in-weigh feeder (39).

9. The food preparation system of claim 7, wherein the seasoning is carried to an outside conduit(s) (42A;42B) by a vacuum eductor (70).

10. The food preparation system of any preceding claim, wherein the source (46) of fluid is compressed air.

11. The food preparation system of any preceding claim, further including a supply (34) of binder connected to each spray nozzle.

12. The food preparation system of any preceding claim, further including metering apparatus to adjustably control the flow of oil, seasoning and compressed air to the spray nozzle assemblies (28).

13. The food preparation system of any preceding claim, wherein the food product (24) is a snack product.

14. The food preparation system of any preceding claim, comprising a central conduit (48) and one or more outside conduits (42A, 42B), and wherein the outside conduits (42A, 42B) include outlets angled inwardly toward the central conduit outlet (54), spray patterns (56, 58, 60) from the outlets converging in front of the spray nozzle assemblies (28).

15. The food preparation system of claim 14, further including a plate (62) proximate the outlets of the central and outer conduits (48, 42A, 42B), the outlet being secured into angular position by the plate (62).

16. The food preparation system of claim 15, wherein the plate (62) includes slots (64) enabling positional adjustment of the conduits (42A, 42B).

17. The food preparation system of any of claims 14 to 16, wherein the central conduit (48) is made of stainless steel.

18. The food preparation system of any of claims 1 to 4, further including a blower port (68) positioned proximate a nozzle outlet (54) of the nozzle assembly (28).

19. The food preparation system of claim 18, wherein said assembly comprises a central conduit (48) and outer conduits (42A, 42B) and further including a plate (62) proximate the outlets of the central and outer conduits (48, 42A, 42B), the outlets of the central and outer conduits being secured into angular position by the plate (62).

20. The food preparation system of claim 19, wherein the plate (62) includes slots (64) enabling positional adjustment of the conduits.

21. The food preparation system of any of claims 1 to 10, or 18 to 20, wherein the first conduit (48) is further adapted to be connected to a supply of binder (34).

22. A method of preparing food products, comprising:
conveying a supply of food product (24);
positioning at least one spray nozzle assembly (28) over the food product;
directing a supply of binder (34) through the spray nozzle assembly (28) producing a first spray pattern (56);
directing a supply of edible material (32) through the spray nozzle assembly (28) producing a second spray pattern (58,60); and
mixing the binder (34) and the edible material (32) by overlapping said spray patterns downstream of the spray nozzle assembly (28); and
depositing the binder (34) and the edible material (32) on the food product.

23. The method of claim 22, wherein an array of spray nozzle assemblies (28) are positioned on a single support bar (30).

24. The method of claim 22 or 23, further including angling (28) first and second outer conduits (42A, 42B) of the spray nozzle assembly (28) toward a central conduit outlet (54).

25. The method of any of claims 22 to 24, further including providing a protective cover (68) over the at least one or the array of spray nozzle assemblies (28).

26. The method of any of claims 22 to 25, further including periodically cleaning the outlet of each nozzle of the nozzle assembly (28) by discharging compressed fluid through a blower port (68) positioned proximate a central conduit outlet (54).

27. The method of any of claims 23 to 26, wherein the edible material is a seasoning.

28. The method of any of claims 23 to 27, wherein the directing, introducing and applying steps are controlled dynamically.

## Patentansprüche

1. Nahrungsmittel-Zubereitungssystem (20), aufweisend:
eine Fördereinrichtung (22), die zum Transportieren eines Vorrats eines Nahrungsmittelprodukts (24) ausgebildet ist;
mindestens eine Sprühdüsenanordnung (28), die nahe der Fördereinrichtung (22) positioniert ist;
einen Vorrat (32) an essbarem Material, der mit der Sprühdüsenanordnung (28) verbunden ist; und
eine Fluidquelle (36), die mit der Sprühdüsenanordnung (28) verbunden ist;
**dadurch gekennzeichnet, dass** die Sprühdüsenanordnung (28) Folgendes aufweist:
einen ersten Kanal (48) zum Ausstoßen des Fluids in einem ersten Sprühmuster (56);
einen dem ersten Kanal (48) benachbarten zweiten Kanal (42A; 42B) zum Ausstoßen des essbaren Materials in einem zweiten Sprühmuster (58, 60), wobei der erste und der zweite Kanal derart angeordnet sind, dass sich die Sprühmuster strömungsabwärts von den Kanälen überlappen, um ein Sprühmuster (56, 58, 60) des essbaren Materials zum Aufbringen auf das Nahrungsmittelprodukt zu erzeugen.

2. Nahrungsmittel-Zubereitungssystem nach Anspruch 1,
mit einer Anzahl von Sprühdüsenanordnungen (28), wobei von der Anzahl von Sprühdüsenanordnungen (28) alle an einer einzigen Trägerstange (30) angebracht sind.

3. Nahrungsmittel-Zubereitungssystem nach Anspruch 2,
wobei die Trägerstange (30) sich über die gesamte laterale Breite der Fördereinrichtung (22) erstreckt.

4. Nahrungsmittel-Zubereitungssystem nach einem der vorausgehenden Ansprüche,
weiterhin mit einer Schutzabdeckung (68), die sich über die mindestens eine Sprühdüsenanordnung (28) oder über die Anzahl von Sprühdüsenanordnungen (28) erstreckt.

5. Nahrungsmittel-Zubereitungssystem nach einem der vorausgehenden Ansprüche,
weiterhin mit einem Reinigungssystem (66), das dem ersten Kanal (48) benachbart angeordnet ist.

6. Nahrungsmittel-Zubereitungssystem nach Anspruch 5,
wobei eine Gebläseöffnung (68) des Reinigungssystems mit einer Druckluftquelle verbunden ist.

7. Nahrungsmittel-Zubereitungssystem nach einem der vorausgehenden Ansprüche,
wobei es sich bei dem Vorrat (32) an essbarem Material um ein Würzmittel handelt.

8. Nahrungsmittel-Zubereitungssystem nach Anspruch 7,
wobei der Würzmittel-Vorrat in einer Gewichtsverlust-Zuführeinrichtung (39) vorgesehen ist.

9. Nahrungsmittel-Zubereitungssystem nach Anspruch 7,
wobei das Würzmittel durch eine Vakuum-Abgabeeinrichtung (70) zu einem oder mehreren äußeren Kanälen (42A; 42B) befördert wird.

10. Nahrungsmittel-Zubereitungssystem nach einem der vorausgehenden Ansprüche,
wobei es sich bei der Fluidquelle (46) um Druckluft handelt.

11. Nahrungsmittel-Zubereitungssystem nach einem der vorausgehenden Ansprüche, weiterhin mit einem Bindemittel-Vorrat (34), der mit jeder Sprühdüse verbunden ist.

12. Nahrungsmittel-Zubereitungssystem nach einem der vorausgehenden Ansprüche,
weiterhin mit einer Dosiervorrichtung zum einstellbaren Steuern des Zustroms von Öl, Würzmittel und Druckluft zu den Sprühdüsenanordnungen (28).

13. Nahrungsmittel-Zubereitungssystem nach einem der vorausgehenden Ansprüche,
wobei es sich bei dem Nahrungsmittelprodukt (24) um einen Knabberartikel handelt.

14. Nahrungsmittel-Zubereitungssystem nach einem der vorausgehenden Ansprüche,
mit einem zentralen Kanal (48) und einem oder mehreren äußeren Kanälen (42A, 42B), wobei die äußeren Kanäle (42A, 42B) Auslässe aufweisen, die in Richtung auf den Auslass (54) des zentralen Kanals nach innen abgwinkelt sind, wobei Sprühmuster (56, 58, 60) von den Auslässen vor den Sprühdüsenanordnungen (28) konvergieren.

15. Nahrungsmittel-Zubereitungssystem nach Anspruch 14,
weiterhin mit einer Platte (62) in der Nähe der Auslässe des zentralen und der äußeren Kanäle (48, 42A, 42B), wobei der Auslass mittels der Platte (62) in einer winkeligen Position befestigt ist.

16. Nahrungsmittel-Zubereitungssystem nach Anspruch 15,
wobei die Platte (62) Schlitze (64) aufweist, die eine positionsmäßige Einstellung der Kanäle (42A, 42B) ermöglichen.

17. Nahrungsmittel-Zubereitungssystem nach einem der Ansprüche 14 bis 16,
wobei der zentrale Kanal (48) aus rostfreiem Stahl hergestellt ist.

18. Nahrungsmittel-Zubereitungssystem nach einem der Ansprüche 1 bis 4,
weiterhin mit einer Gebläseöffnung (68), die in der Nähe eines Düsenauslasses (54) der Düsenanordnung (28) angeordnet ist.

19. Nahrungsmittel-Zubereitungssystem nach Anspruch 18,
wobei die Anordnung einen zentralen Kanal (48) und äußere Kanäle (42A, 42B) beinhaltet und ferner eine Platte (62) in der Nähe der Auslässe des zentralen und der äußeren Kanäle (48, 42A, 42B) aufweist, wobei die Auslässe des zentralen und der äußeren Kanäle mittels der Platte (62) in einer winkeligen Position befestigt sind.

20. Nahrungsmittel-Zubereitungssystem nach Anspruch 19,
wobei die Platte (64) Schlitze aufweist, die eine positionsmäßige Einstellung der Kanäle ermöglichen.

21. Nahrungsmittel-Zubereitungssystem nach einem der Ansprüche 1 bis 10 oder 18 bis 20,
wobei der erste Kanal (48) ferner dazu ausgebildet ist, mit einem Bindemittel-Vorrat (34) verbunden zu werden.

22. Verfahren zum Zubereiten von Nahrungsmittelprodukten, das folgende Schritte aufweist:
Befördern eines Vorrats eines Nahrungsmittelprodukts (24);
Positionieren von mindestens einer Sprühdüsenanordnung (28) über dem Nahrungsmittelprodukt;
Leiten eines Bindemittel-Vorrats (34) durch die Sprühdüsenanordnung (28) unter Erzeugung eines ersten Sprühmusters (56);
Leiten eines Vorrats an essbarem Material (32) durch die Sprühdüsenanordnung (28) unter Erzeugung eines zweiten Sprühmusters (58, 60); und
Mischen des Bindemittels (34) und des essbaren Materials (32) durch Überlappen der Sprühmuster strömungsabwärts von der Sprühdüsenanordnung (28); und
Aufbringen des Bindemittels (34) und des essbaren Materials (32) auf das Nahrungsmittelprodukt.

23. Verfahren nach Anspruch 22,
wobei eine Anzahl von Sprühdüsenanordnungen (28) an einer einzigen Trägerstange (30) angeordnet sind.

24. Verfahren nach Anspruch 22 oder 23,
wobei ferner ein erster und ein zweiter äußerer Kanal (42A, 42B) der Sprühdüsenanordnung (28) in Richtung auf einen zentralen Kanalauslass (54) abgewinkelt (28) werden.

25. Verfahren nach einem der Ansprüche 22 bis 24,
wobei ferner eine Schutzabdeckung (68) über der mindestens einen Sprühdüsenanordnung (28) oder der Anzahl von Sprühdüsenanordnungen (28) vorgesehen wird.

26. Verfahren nach einem der Ansprüche 22 bis 25,
wobei ferner der Auslass jeder Düse der Düsenanordnung (28) periodisch gereinigt wird, indem Druckfluid durch eine Gebläseöffnung (68) abgegeben wird, die in der Nähe eines zentralen Kanalauslasses (54) positioniert ist.

27. Verfahren nach einem der Ansprüche 23 bis 26,
wobei es sich bei dem essbaren Material um ein Würzmittel handelt.

28. Verfahren nach einem der Ansprüche 23 bis 27,
wobei die Schritte des Hindurchleitens, Einbringens und Aufbringens dynamisch gesteuert werden.

## Revendications

1. Système (20) de préparation alimentaire, comportant :
un convoyeur (22) prévu pour transporter un approvisionnement en produit alimentaire (24) ;
au moins un ensemble (28) de buses de pulvérisation positionné à proximité du convoyeur (22),
une réserve (32) de matière comestible reliée à l'ensemble (28) de buses de pulvérisation ; et
une source (36) de fluide reliée à l'ensemble (28) de buses de pulvérisation ;
**caractérisé en ce que**
l'ensemble (28) de buses de pulvérisation comprend :
un premier conduit (48) destiné à expulser le fluide suivant un premier profil (56) de pulvérisation ; et
un deuxième conduit (42A ; 42B) adjacent au premier conduit (48) destiné à expulser la matière comestible suivant un deuxième profil (58, 60) de pulvérisation ;
les premier et deuxième conduits étant disposés de telle sorte que lesdits profils de pulvérisation se chevauchent en aval desdits conduits pour produire un profil (56, 58, 60) de pulvérisation de matière comestible destiné à être appliqué au produit alimentaire.

2. Système de préparation alimentaire selon la revendication 1, comportant un alignement d'ensembles (28) de buses de pulvérisation et dans lequel tous les ensembles de l'alignement d'ensembles (28) de buses de pulvérisation sont montés sur une barre-support (30) unique.

3. Système de préparation alimentaire selon la revendication 2, dans lequel la barre-support (30) s'étend sur toute la largeur latérale du convoyeur (22).

4. Système de préparation alimentaire selon l'une quelconque des revendications précédentes, comprenant en outre un couvercle (68) de protection s'étendant par-dessus ledit au moins un ensemble ou l'alignement d'ensembles (28) de buses de pulvérisation.

5. Système de préparation alimentaire selon l'une quelconque des revendications précédentes, comprenant en outre un système (66) de nettoyage positionné au voisinage du premier conduit (48).

6. Système de préparation alimentaire selon la revendication 5, dans lequel un orifice (68) de soufflage dudit système de nettoyage est relié à une source d'air comprimé.

7. Système de préparation alimentaire selon l'une quelconque des revendications précédentes, dans lequel la réserve (32) de matière comestible est un assaisonnement.

8. Système de préparation alimentaire selon la revendication 7, dans lequel la réserve d'assaisonnement est mise en place dans un alimentateur-peseur (39) à perte.

9. Système de préparation alimentaire selon la revendication 7, dans lequel l'assaisonnement est amené jusqu'à un ou des conduits extérieurs (42A ; 42B) par un éjecteur à vide (70).

10. Système de préparation alimentaire selon l'une quelconque des revendications précédentes, la source (36) de fluide étant de l'air comprimé.

11. Système de préparation alimentaire selon l'une quelconque des revendications précédentes, comprenant en outre un approvisionnement (34) en liant relié à chaque buse de pulvérisation.

12. Système de préparation alimentaire selon l'une quelconque des revendications précédentes, comprenant en outre un appareil de dosage destiné à réguler de façon réglable le débit d'huile, d'assaisonnement et d'air comprimé vers les ensembles (28) de buses de pulvérisation.

13. Système de préparation alimentaire selon l'une quelconque des revendications précédentes, dans lequel le produit alimentaire (24) est un produit pour en-cas.

14. Système de préparation alimentaire selon l'une quelconque des revendications précédentes, comportant un conduit central (48) et un ou plusieurs conduits extérieurs (42A ; 42B), et dans lequel les conduits extérieurs (42A ; 42B) comprennent des sorties inclinées vers l'intérieur en direction de la sortie (54) du conduit central, des profils (56, 58, 60) de pulvérisation issus des sorties convergeant devant les ensembles (28) de buses de pulvérisation.

15. Système de préparation alimentaire selon la revendication 14, comprenant en outre une plaque (62) située à proximité des sorties des conduits central et extérieurs (48, 42A, 42B), la sortie étant immobilisée en position angulaire par la plaque (62).

16. Système de préparation alimentaire selon la revendication 15, la plaque (62) comprenant des rainures (64) permettant le réglage de la position des conduits (42A, 42B).

17. Système de préparation alimentaire selon l'une quelconque des revendications 14 à 16, dans lequel le conduit central (48) est constitué d'acier inoxydable.

18. Système de préparation alimentaire selon l'une quelconque des revendications 1 à 4, comprenant en outre un orifice (68) de soufflage positionné à proximité d'une sortie (54) de buse de l'ensemble (28) de buses.

19. Système de préparation alimentaire selon la revendication 18, dans lequel ledit ensemble comporte un conduit central (48) et des conduits extérieurs (42A ; 42B) et comprenant en outre une plaque (62) située à proximité des sorties dès conduits central et extérieurs (48, 42A, 42B), les sorties des conduits central et extérieurs étant immobilisées en position angulaire par la plaque (62).

20. Système de préparation alimentaire selon la revendication 19, dans lequel la plaque (62) comprend des rainures (64) permettant le réglage de la position des conduits.

21. Système de préparation alimentaire selon l'une quelconque des revendications 1 à 10 ou 18 à 20, dans lequel le premier conduit (48) est en outre prévu pour être relié à un approvisionnement en liant (34).

22. Procédé de préparation de produits alimentaires, comportant les étapes consistant à :
acheminer un approvisionnement en produit alimentaire (24) ;
positionner au moins un ensemble (28) de buses de pulvérisation au-dessus du produit alimentaire ;
diriger un approvisionnement en liant (34) à travers l'ensemble (28) de buses de pulvérisation, produisant un premier profil (56) de pulvérisation ;
diriger un approvisionnement en matière comestible (32) à travers l'ensemble (28) de buses de pulvérisation, produisant un deuxième profil (58, 60) de pulvérisation ; et
mélanger le liant (34) et la matière comestible (32) en faisant se chevaucher lesdits profils de pulvérisation en aval de l'ensemble (28) de buses de pulvérisation ; et
déposer le liant (34) et la matière comestible (32) sur le produit alimentaire.

23. Procédé selon la revendication 22, dans lequel un alignement d'ensembles (28) de buses de pulvérisation est positionné sur une barre-support (30) unique.

24. Procédé selon la revendication 22 ou 23, comportant en outre l'étape consistant à incliner les premier et deuxième conduits extérieurs (42A, 42B) de l'ensemble (28) de buses de pulvérisation en direction d'une sortie (54) de conduit central.

25. Procédé selon l'une quelconque des revendications 22 à 24, comportant en outre l'étape consistant à mettre en place un couvercle (68) de protection par-dessus ledit au moins un ensemble ou l'alignement d'ensembles (28) de buses de pulvérisation.

26. Procédé selon l'une quelconque des revendications 22 à 25, comportant en outre l'étape consistant à nettoyer périodiquement la sortie de chaque buse de l'ensemble (28) de buses en libérant un fluide comprimé par un orifice (68) de soufflage positionné à proximité d'une sortie (54) de conduit central.

27. Procédé selon l'une quelconque des revendications 23 à 26, dans lequel la matière comestible est un assaisonnement.

28. Procédé selon l'une quelconque des revendications 23 à 27, dans lequel les étapes de direction, d'introduction et d'application sont commandées dynamiquement.
